# EUROPEAN PATENT APPLICATION

(11) **EP 1 524 537 A1**
(43) Date of publication of application: **20.04.2005**
(21) Application number: 04016674.6
(22) Date of filing: 15.07.2004
(51) Int. Cl.: G02B 6/26, G02B 6/35, G02B 26/08

(54) **Variable optical attenuator**

(30) Priority: 13.10.2003 KR 2003071035
(71) Applicant: LG Electronics Inc., Seoul 150-721 (KR)
(72) Inventor: Yee, Young Joo, Yatap-dong, Bundang-gu, Gyeonggi-do (KR); Ji, Chang Hyeon, Seocho-gu, Seoul (KR)
(74) Representative: Vetter, Ewald Otto

(57) **Abstract**

A variable optical attenuator is disclosed. The variable optical attenuator includes an optical fiber part formed of at least one input optical fiber integrated with at least one output optical fiber, a mirror part having at least one micromirror facing into and spaced apart from the optical fiber part, reflecting emitted light rays emitted from the input fiber to the output fiber, and making one of a vertical movement and a rotational movement, so as to attenuate the emitted light rays, and a lens formed between the optical fiber part and the mirror part, and focusing the emitted light rays emitted from the input optical fiber to the micromirror.

## Description

### CROSS-REFERENCE TO RELATED APPLICATIONS

This application claims the benefit of Korean Application No.10-2003-0071035, filed on October 13, 2003, which is hereby incorporated by reference as if fully set forth herein.

### BACKGROUND OF THE INVENTION

### Field of the Invention

The present invention relates to an optical switch used in an optical communication network, and more particularly, to a variable optical attenuator having a micromirror.

### Discussion of the Related Art

A wavelength division multiplexed optical communication system are widely developed and supplied in order to effectively transmit various forms of information that are currently in mass production.

In such optical communication systems, a plurality of types of information are stored in a plurality of light sources each having a different wavelength, which are then multiplexed in order to be transmitted through a single optical fiber. Then, a receiving terminal demultiplexes the multiplexed signals and divides the signal so as to receive the optical signals corresponding to each wavelength.

Meanwhile, since optical signals tend to be reduced when transmitting optical signals to a long distance, a plurality of optical amplifiers must be used inbetween transmissions. At this point, due to a difference in wavelengths depending upon the gains of optical amplifiers and the characteristics of a demultiplexer, each wavelength generates a different optical output.

When a plurality of different optical outputs is multiplexed, and when the multiplexed outputs are transmitted, then the optical output for each wavelength loses uniformity, thereby deteriorating the characteristics of the signals and ultimately disabling transmission of the signals.

Accordingly, a variable optical attenuator is required to allow the strength of the optical signals corresponding to each wavelength to be uniform.

Generally, an optical attenuator reduces the signals of wavelengths being different from the optical signal having the lowest wavelength.

Examples of the related art optical attenuator include a device mechanically moving optical fibers by using a monitor, a device using a micro-electromechanical system (MEMS) actuator, a device having a portion of an optical fiber grinded and a special material coated on the surface thereof, and a Mach-Zehnder interferometric modulator using a thermo-optic effect on a silica substrate.

However, devices such as the mechanical optical attenuator and the optical attenuator formed by grinding a portion of the optical fiber are disadvantageous in that the size of the devices is larger and integration with other optical devices cannot be performed. Additionally, the MEMS device and the optical attenuator using the silica device have problems of requiring high driving voltage and power.

### SUMMARY OF THE INVENTION

Accordingly, the present invention is directed to a variable optical attenuator that substantially obviates one or more problems due to limitations and disadvantages of the related art.

An object of the present invention is to provide a variable optical attenuator that is compact in size and lightweight.

Another object of the present invention is to provide a variable optical attenuator having a more simplified and easy fabrication process and a lower cost and allowing mass production.

A further object of the present invention is to provide a variable attenuator having a faster response speed and requiring lower driving power.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, variable optical attenuator includes an optical fiber part formed of at least one input optical fiber integrated with at least one output optical fiber, a mirror part having at least one micromirror facing into and spaced apart from the optical fiber part, reflecting emitted light rays emitted from the input fiber to the output fiber, and making one of a vertical movement and a rotational movement, so as to attenuate the emitted light rays, and a lens formed between the optical fiber part and the mirror part, and focusing the emitted light rays emitted from the input optical fiber to the micromirror.

Herein, the input optical fiber and the output optical fiber of the optical fiber part are either adjacent to one another or spaced apart from one another, and the optical fiber part includes an input optical fiber and an output optical fiber, a tube surrounding the input optical fiber and the output optical fiber, and an optical fiber fastener fixed between the input and output optical fibers and the tube, so as to fasten the input and output optical fibers.

In addition, the mirror unit includes a substrate having at least one via hole, a micromirror formed on an area of the at least one via hole, a reflective surface formed on the micromirror, an elastic body formed on the micromirror at each side of the reflective surface, a spring connecting a surface of the micromirror and the substrate, and a coil formed on the surface around the micromirror including the spring and making rotational movements of the micromirror in accordance with an external electrical signal.

Herein, the elastic body and the spring are formed to be perpendicular to each other, and the coil includes a first electrode pad and a second electrode pad, a lower conductive wire connected to the first electrode pad, an upper conductive wire connected to the second electrode pad, a core electrically connecting the lower conductive wire to the upper conductive wire, a lower insulating layer insulating the substrate and the lower conductive wire, and an upper insulating layer insulating the upper conductive wire and the lower conductive wire.

Also, the mirror unit includes a substrate having at least one via hole, a micromirror formed on an area of the at least one via hole, a reflective surface formed on the micromirror, a spring connecting four surface of the micromirror to the substrate, and a coil formed on the micromirror around the reflective surface and making vertical movements of the micromirror in accordance with an external electrical signal.

In another aspect of the present invention, a variable optical attenuator includes at least one of an input optical fiber and an output optical fiber adjacent to or spaced apart from one another, a tube surrounding the input optical fiber and the output optical fiber, an optical fiber fastener fixed between the input and output optical fibers and the tube, so as to fasten the input and output optical fibers, a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays, a mirror support fixed to a lower portion of the mirror unit and supporting the mirror unit, a lens formed between the input and output optical fibers and the mirror part, and focusing the emitted light rays emitted from the input optical fiber to the micromirror, and a lens support fixed to an upper portion of the mirror unit and supporting the lens.

Herein, the variable optical attenuator further includes a cap fixed to the mirror support so as to be formed on the upper portion of the mirror unit including the lens, and having a window transmitting the emitted light rays emitted from the input optical fiber fixed to a central portion of the cap.

Additionally, a magnetic coil is fixed to an outer surface of the cap, so as to apply an external magnetic field to the micromirror of the mirror unit.

In another aspect of the present invention, a variable optical attenuator includes at least one of an input optical fiber and an output optical fiber adjacent to or spaced apart from one another, a tube surrounding the input optical fiber and the output optical fiber, an optical fiber fastener fixed between the input and output optical fibers and the tube, so as to fasten the input and output optical fibers, a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays, a mirror support fixed to a lower portion of the mirror unit and supporting the mirror unit, a lens formed between the input and output optical fibers and the mirror part, and focusing the emitted light rays emitted from the input optical fiber to the micromirror, and a cap formed on an upper portion of the mirror unit including the mirror support, and fastening the lens.

Herein, a magnetic coil is fixed to an outer surface of the cap, so as to apply an external magnetic field to the micromirror of the mirror unit.

In a further aspect of the present invention, a variable optical attenuator includes at least one of an input optical fiber and an output optical fiber adjacent to or spaced apart from one another, a tube surrounding the input optical fiber and the output optical fiber, an optical fiber fastener fixed between the input and output optical fibers and the tube, so as to fasten the input and output optical fibers, a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays, a mirror support fixed to a lower portion of the mirror unit and supporting the mirror unit, a lens formed at a front portion of the input and output optical fibers inside the tube, and focusing the emitted light rays emitted from the input optical fiber to the micromirror, and a cap formed on an upper portion of the mirror unit and having a window transmitting the emitted light rays emitted from the input optical fiber.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings;

FIG. 1 illustrates the driving principle of the variable optical attenuator according to the present invention;

FIG. 2 illustrates the driving principle of the variable optical attenuator according to the present invention, wherein a micromirror moves in a vertical direction;

FIGs. 3A and 3B illustrate the driving principle of the variable optical attenuator according to the present invention, wherein the micromirror makes rotational movements;

FIG. 4 illustrates a package of the variable optical attenuator according to a first embodiment of the present invention;

FIG. 5 illustrates a package of the variable optical attenuator according to a second embodiment of the present invention;

FIG. 6 illustrates a package of the variable optical attenuator according to a third embodiment of the present invention;

FIG. 7 illustrates a package of the variable optical attenuator according to a fourth embodiment of the present invention;

FIG. 8A illustrates a perspective view of a mirror part of the variable optical attenuator according to the present invention;

FIG. 8B illustrates a cross-sectional view taken along line I-I of FIG. 8A;

FIG. 8C illustrates a cross-sectional view taken along line II-II of FIG. 8A;

FIG. 9A illustrates a perspective view showing the operation of the mirror of FIG. 8A;

FIG. 9B illustrates a cross-sectional view taken along line I-I of FIG. 9A;

FIG. 10 illustrates a coil for driving a magnetic force driven micromirror being integrated to the mirror part;

FIG. 11A illustrates an electric current flow of the coil of FIG. 10;

FIG. 11B illustrates a cross-sectional view taken along line III-III of FIG. 11A;

FIG. 12A illustrates a perspective view of another mirror part of the variable optical attenuator according to the present invention;

FIG. 12B illustrates a plane view of the mirror part of FIG. 12A;

FIG. 12C illustrates a cross-sectional view taken along line IV-IV of FIG. 12B; and

FIGs. 13 and 14 illustrate a magnetic coil being mounted on the package of the variable optical attenuator according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The variable optical attenuator according to the present invention is formed by integrating integrated input and output optical fibers, a lens, and a micromirror formed by a silicon micromachining method and a series of semiconductor manufacturing processes, thereby providing a variable optical attenuator that is compact in size and lightweight, has a more simplified and easy fabrication process and a lower cost and allowing mass production, and has a faster response speed and requiring lower driving power.

In addition, due to its fabrication by micromachining technology, the micromirror is operated minutely and finely, and so, the response speed is enhanced and the required driving power is decreased, thereby improving the functions of the variable optical attenuator.

Furthermore, the variable optical attenuator according to the present invention can represent a drop module of an Optical Add/Drop Multiplexer (OADM) having a plurality of channels.

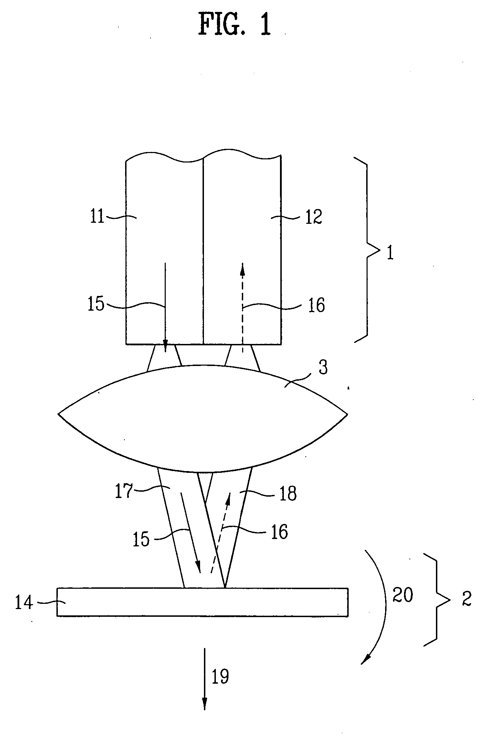

FIG. 1 illustrates the driving principle of the variable optical attenuator according to the present invention.

Referring to FIG. 1, the variable optical attenuator according to the present invention broadly consists of an optical fiber part 1, a mirror part 2, and a lens 3 arranged between the optical fiber part 1 and the mirror part 2.

The optical fiber part 1 is formed of at least one input optical fiber 11 and at least one output optical fiber 12 integrated therein. The input optical fiber 11 and the output optical fiber 12 are formed to be either adjacent to one another or spaced apart from one another.

The mirror part 2 is formed of at least one micromirror 14 and arranged to face into and be spaced apart from the optical fiber part 1. In addition, the mirror part 2 reflects light rays emitted from the input optical fiber 11 to the output optical fiber 12, and attenuates the emitted light rays through a vertical or rotational movement.

Furthermore, the lens 3 is formed between the optical fiber part 1 and the mirror part 2. The lens 3 focuses the emitted light rays emitted from the input optical fiber 11 to the micromirror 14 of the mirror part 2.

The driving principle of the present invention having the above-described structure will now be described in detail.

The emitted light rays emitted from the input optical fiber 11 are passed through the input optical path 15 and the output optical path 16. Accordingly, the micromirror 14 transmits the entire inputted light rays 17 to the output optical fiber 12. The attenuation of the emitted light rays 18 occurs as the output optical path 16 deviates from its initial position due to the vertical movement 19 or the rotational movement 20 of the micromirror 14.

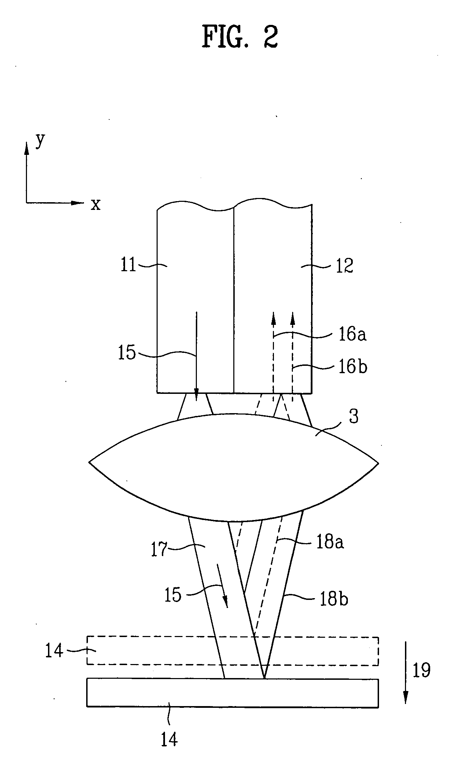

FIG. 2 illustrates the driving principle of the variable optical attenuator according to the present invention, wherein a micromirror moves in a vertical direction.

Referring to FIG. 2, when the micromirror 14 makes a vertical movement 19, the optical path of the first emitted light rays 18a, which is the initial state of the emitted light rays 18, is changed to the output optical path of the second emitted light rays 18b. Accordingly, the attenuated amount of the second emitted light rays 18b varies proportionally in accordance with the degree of change in the optical path. In other words, the attenuated amount of the emitted light rays 18 increases proportionally to the deviated degree of the optical path of the emitted light rays 18 from its initial position.

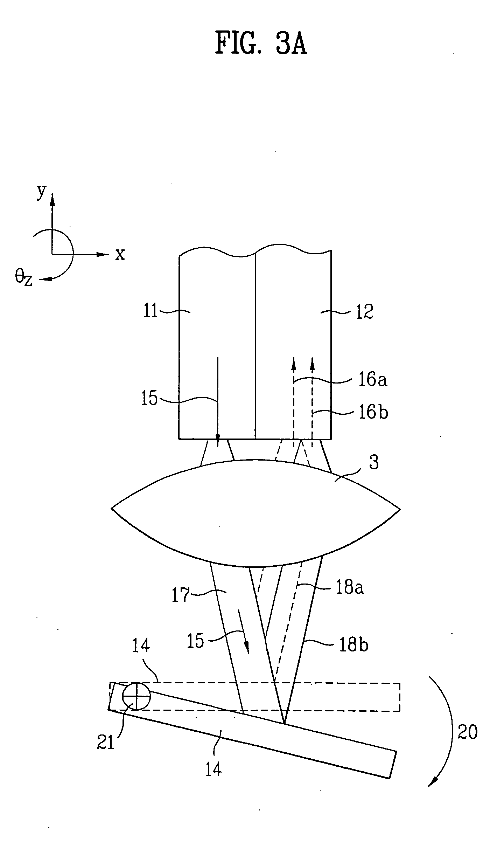

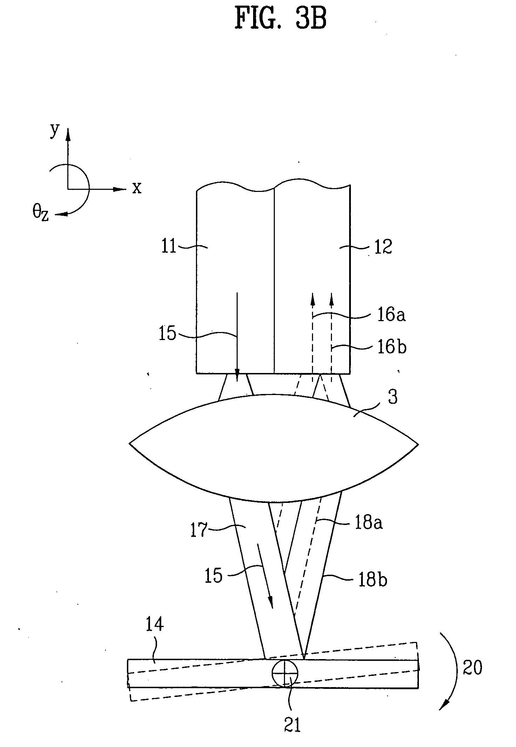

FIGs. 3A and 3B illustrate the driving principle of the variable optical attenuator according to the present invention, wherein the micromirror makes rotational movements.

FIG. 3A illustrates a rotation axis 21 formed at a lower end portion of the micromirror 14, and FIG. 3B illustrates the rotation axis 21 formed at a middle portion of the micromirror 14.

Referring to FIGs. 3A and 3B, when micromirror 14 makes a rotational movement 20 in a θz direction, the optical path of the first emitted light rays 18a, which is the initial state, is changed to the optical path of the second emitted light rays 18b. And, accordingly, the second emitted light rays 18b is proportionally attenuated in accordance with the degree of change in the optical path.

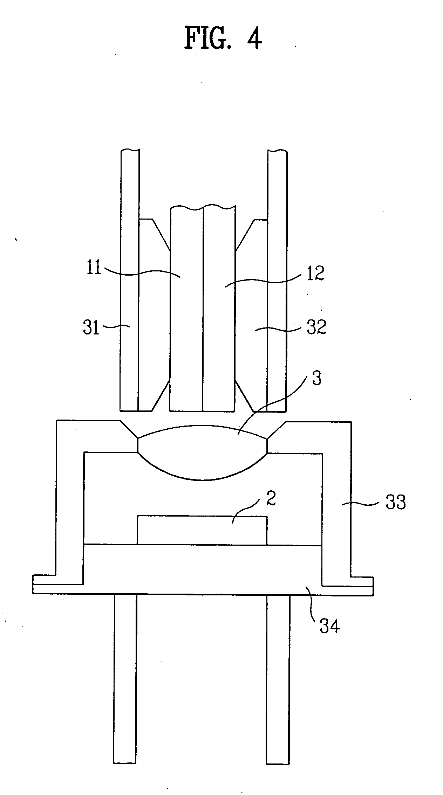

FIGs. 4. to 7 illustrate a package of the variable optical attenuator according to first, second, third, and fourth embodiments of the present invention.

### First Embodiment

Referring to FIG. 4, a lens 3 is fixed on a cap 33 in the variable optical attenuator according to the first embodiment of the present invention.

A tube 31 encompasses the input and output optical fibers 11 and 12. An optical fiber fastener 32 for fastening the optical fibers 11 and 12 is fixed between the input and output optical fibers 11 and 12 and the tube 31. Herein, the input optical fiber 11 and the output optical fiber 12 may be either adjacent to one another or spaced apart from one another.

In addition, the optical fiber fastener 32 can be formed in the shape of a V-groove or a ferrule. The optical fiber fastener 32 may be formed of a wide range of materials, such as glass, silicon, zirconium, metal, or polymer.

Moreover, a mirror support 34 is formed on a lower portion of the mirror part 2, so as to support the mirror part 2 having the micromirror 14 formed thereon. Herein, the mirror part 2 and the mirror support 34 are electrically connected to each other by wire bonding.

Furthermore, a cap 33 covers the upper portion of the mirror part 2 in order to protect the mirror part 2. The cap 33 enables the mirror part 2 to be treated with hermetic packaging. Herein, a lens 3 is fixed on the middle portion of the cap 33, so as to focus the light rays emitted from the input optical fiber 11.

### Second Embodiment

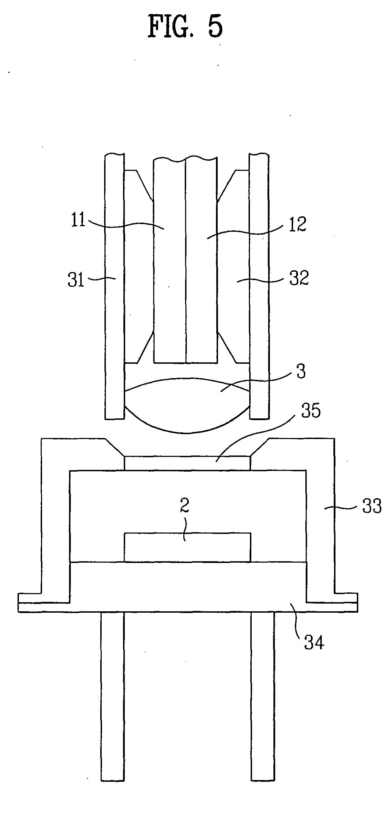

Referring to FIG. 5, a lens 3 is fixed on a cap 33 in the variable optical attenuator according to the second embodiment of the present invention.

A tube 31 encompasses the input and output optical fibers 11 and 12. An optical fiber fastener 32 for fastening the optical fibers 11 and 12 is fixed between the input and output optical fibers 11 and 12 and the tube 31.

In addition, a lens 3 is fixed in the tube 31 on the front portion of the input and output optical fiber 11 and 12, which focuses the light rays emitted from the input optical fiber 11. Moreover, a mirror support 34 is formed on a lower portion of the mirror part 2, so as to support the mirror part 2 having the micromirror 14 formed thereon.

Furthermore, a cap 33 covers the upper portion of the mirror part 2 in order to protect the mirror part 2. The cap 33 enables the mirror part 2 to be treated with hermetic packaging. Herein, a window 35 is fixed on the middle portion of the cap 33. The window 35 transmits the light rays emitted from the input optical fiber 11.

### Third Embodiment

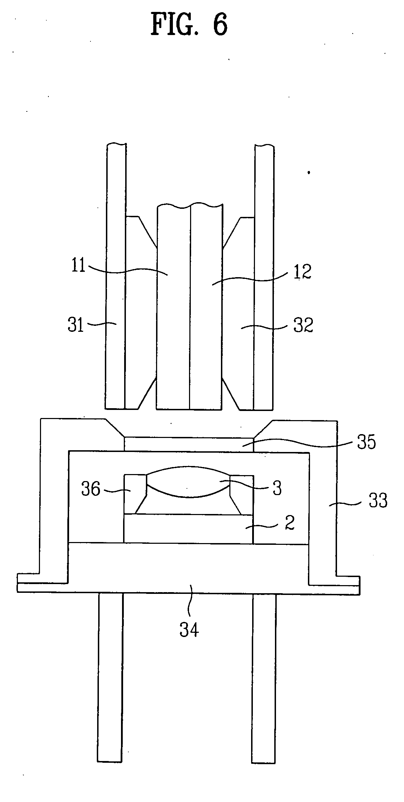

Referring to FIG. 6, a lens 3 is fixed on a lens fastener 36 of the mirror part 2 in the variable optical attenuator according to a third embodiment of the present invention.

The variable optical attenuator according to the third embodiment of the present invention has the same structure as that of the second embodiment, except for that a lens fastener 36 for fastening the lens 3 in additionally formed herein.

The lens fastener 36 is formed at an edge portion of a substrate of the mirror part 2 at a predetermined height. The lens fastener 36 fastens the lens 3, which focuses the light rays emitted from the input optical fiber 11. Herein, the cap 33 enables the mirror part 2 to be treated with hermetic packaging.

### Fourth Embodiment

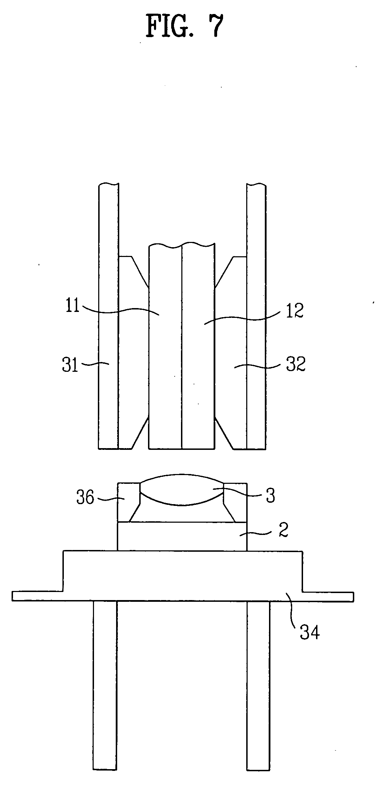

Referring to FIG. 7, a lens 3 is fixed on a lens fastener 36 of the mirror part 2 in the variable optical attenuator according to a fourth embodiment of the present invention.

The variable optical attenuator according to the fourth embodiment of the present invention has the same structure as that of the third embodiment, except for that the cap 33 having a window 35 formed thereon is removed. Therefore, the lens 3 in the fourth embodiment simultaneously functions as the lens 3 or the window 35 formed on the cap 33 in the first, second, and third embodiments.

In the above-described embodiments of the present invention, with the exception of the reflective surface of the micromirror 14, a layer of anti-reflection coating is deposited on each of the end portions of the input and output optical fibers 11 and 12, the lens 3, and the window 35, thereby enhancing photoefficiency and reducing return loss.

In addition, the end portions of the input and output optical fibers 11 and 12 may also be treated to have slight angle (e.g., an angle of approximately 8 degrees).

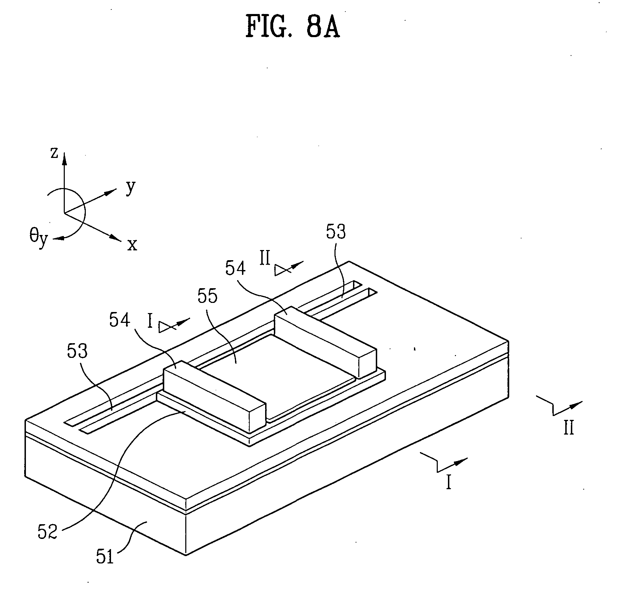

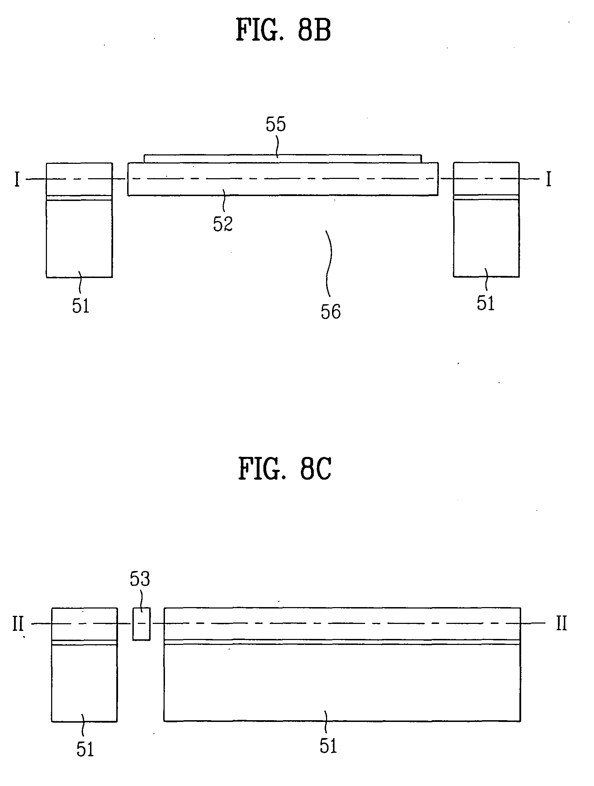

FIG. 8A illustrates a perspective view of a mirror part of the variable optical attenuator according to the present invention. FIG. 8B illustrates a cross-sectional view taken along line I-I of FIG. 8A. And, FIG. 8C illustrates a cross-sectional view taken along line II-II of FIG. 8A.

FIG. 8A is an example of a micromirror driven by electromagnetic force, which may be applied to the variable optical attenuator making the rotational movement shown in FIG. 3A.

Referring to FIG. 8A, at least one via hole 56 is formed on a substrate 51. Depending upon the fabrication process, either at least one via hole 56 can be formed on the substrate 51, or a lower surface of the substrate 51 can be etched to expose a surface of the micromirror.

In addition, a micromirror 52 is formed in the via hole area. A reflective surface 55 is formed on the micromirror 52, and an elastic body 54 is formed on the micromirror 52 at each side of the reflective surface 55. Furthermore, a spring 53 connects a surface of the micromirror 52 to the substrate 51. Herein, the elastic body 54 and the spring 53 are formed to be perpendicular to each other.

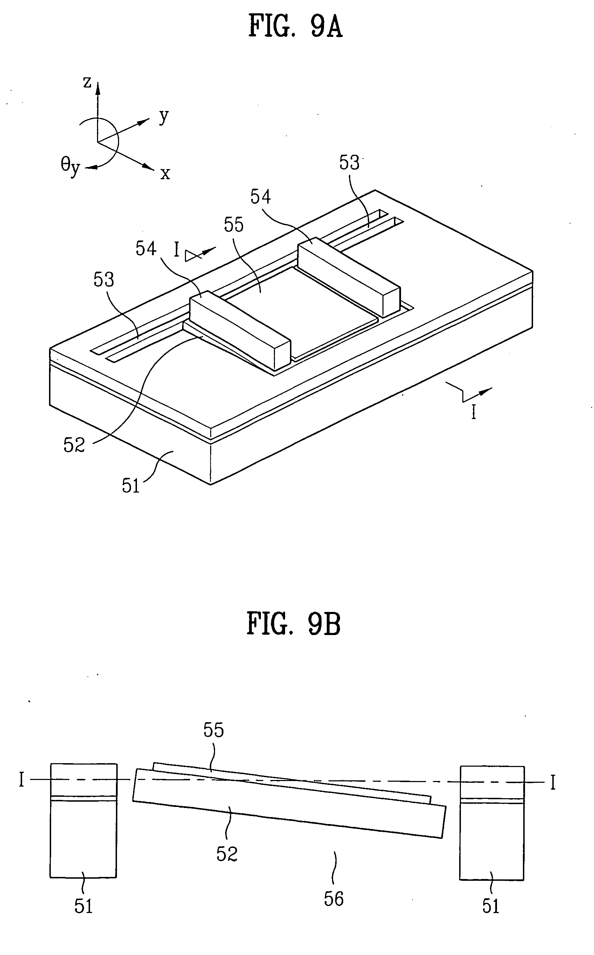

FIG. 9A illustrates a perspective view showing the operation of the mirror of FIG. 8A. And, FIG. 9B illustrates a cross-sectional view taken along line I-I of FIG. 9A.

Referring to FIG. 9A, the micromirror 52 driven by electromagnetic force is operated in a +θ y direction. Herein, in order to operate the micromirror 52 a magnetic field is externally applied to the substrate 51 in a vertical direction. When a magnetic field is applied to the substrate 51 in a-z direction (*i*.*e*., a vertical direction), a torque is applied to the micromirror 52 in a +θ y direction. Then, the micromirror 52 rotates until it reaches a position parallel to a recovery torque caused by the driving torque and the spring.

Therefore, by controlling the size of the external magnetic field applied to the micromirror 52, the angular displacement can be controlled.

Since the micromirror 52 can be rotated in either one of the +θ y direction and the -θ y direction, an adequate direction can be selected depending upon the structure of the optical system. In other words, when the external magnetic field is applied in a +z direction, the micromirror rotates in the -θ y direction. Conversely, when the external magnetic field is applied in a -z direction, the micromirror rotates in the +θ y direction.

The micromirror driven by magnetic force, shown in FIGs. 8A and 9A, has a rotation axis formed at one end of the micromirror 52. Therefore, the micromirrors driven by magnetic force of FIGs. 8A and 9A are suitable for the variable optical attenuator having a micromirror with the rotational movement shown in FIG. 3A.

In addition, by controlling the relative position of the spring and the elastic body, the micromirror driven by magnetic force shown in FIGs. 8A and 9A can also be applied in the structure where the rotation axis is at the central portion of the micromirror, as shown in FIG. 3B.

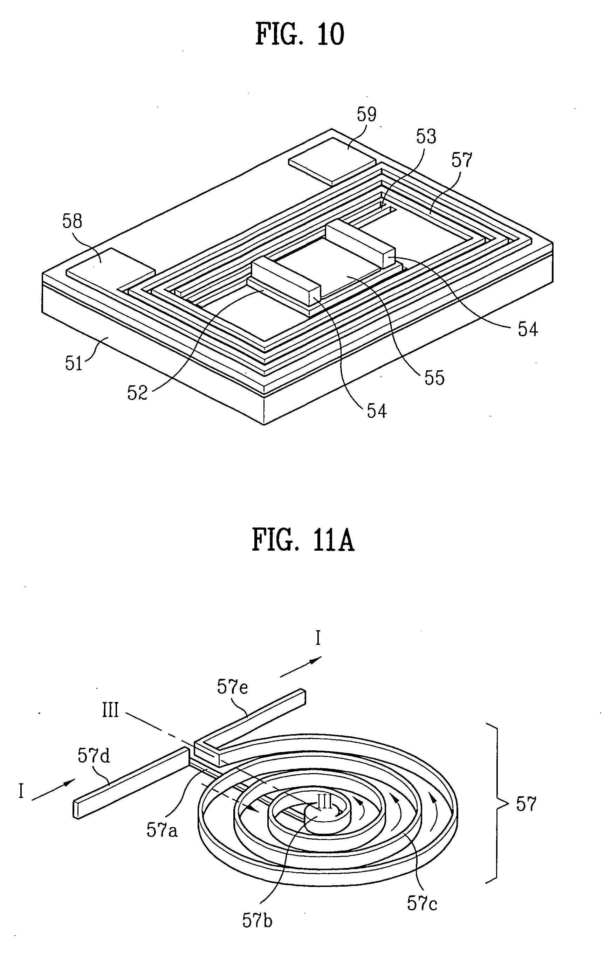

FIG. 10 illustrates a coil for driving a magnetic force driven micromirror being integrated to the mirror part.

Referring to FIG. 10, the coil 57 is formed on the area of the substrate surrounding the micromirror 52 including the spring 53. The coil 57 rotates the micromirror 52 in accordance with an external electric signal. Herein, the coil 57 is formed on the same substrate 51 as the micromirror 52, and a first electrode pad 58 and a second electrode pad 59 are respectively formed on each end of the coil 57.

When an electric current is applied between the first electrode pad 58 and the second electrode pad 59, a magnetic field is applied to the micromirror in either the +z direction or the -z direction depending upon the direction of the electric current. Accordingly, the micromirror 52 can be rotated in either the +θ y direction or the -θ y direction.

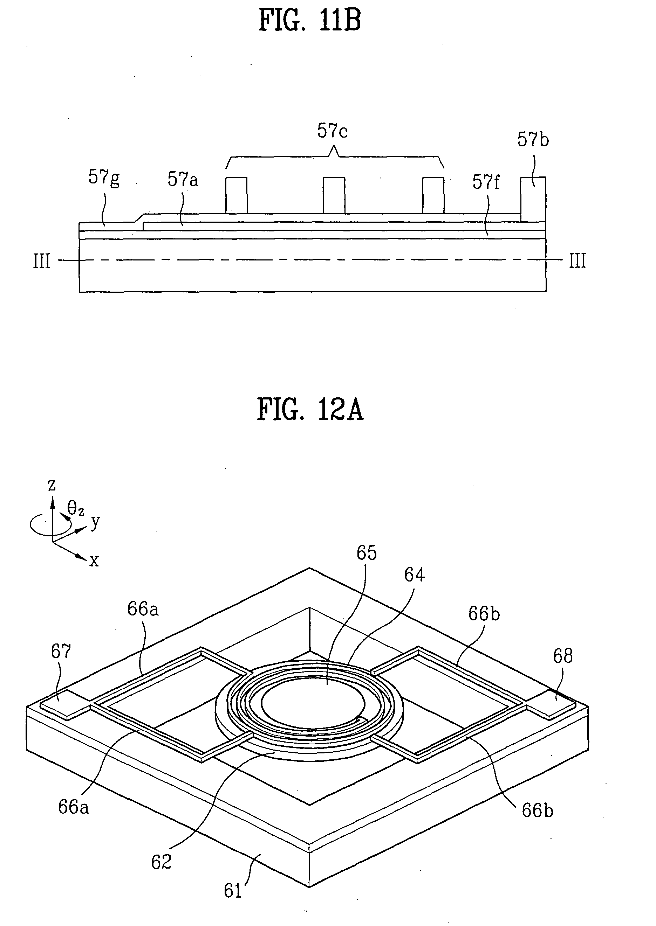

FIG. 11A illustrates an electric current flow of the coil of FIG. 10. And, FIG. 11B illustrates a cross-sectional view taken along line III-III of FIG. 11A.

Referring to FIGs. 11A and 11B, the coil 57 includes first and second electrode pads (not shown), a lower conductive wire 57a connected to the first electrode pad by a first connector 57d, an upper conductive wire 57c connected to the second electrode pad by a second connector 57e, a core 57b electrically connecting the lower conductive wire 57a and the upper conductive wire 57c, a lower insulating layer 57f insulating the substrate 51 and the lower conductive wire 57a, and an upper insulating layer 57g insulating the upper conductive wire 57c and the lower conductive wire 57a.

As shown in FIG: 11A, when an electric current flows through the coil, the lower conductive wire 57c sends the electric current (I) to the core 57b, which is the center of the coil 57. The electric current flown into the core 57b through the lower conductive wire 57a flows back out to the second connector 57e through the upper conductive wire 57c, which actually acts as the coil.

Conversely, when the direction of the electric current is opposite to the one described above, the path of the electric current becomes the opposite of the one described above.

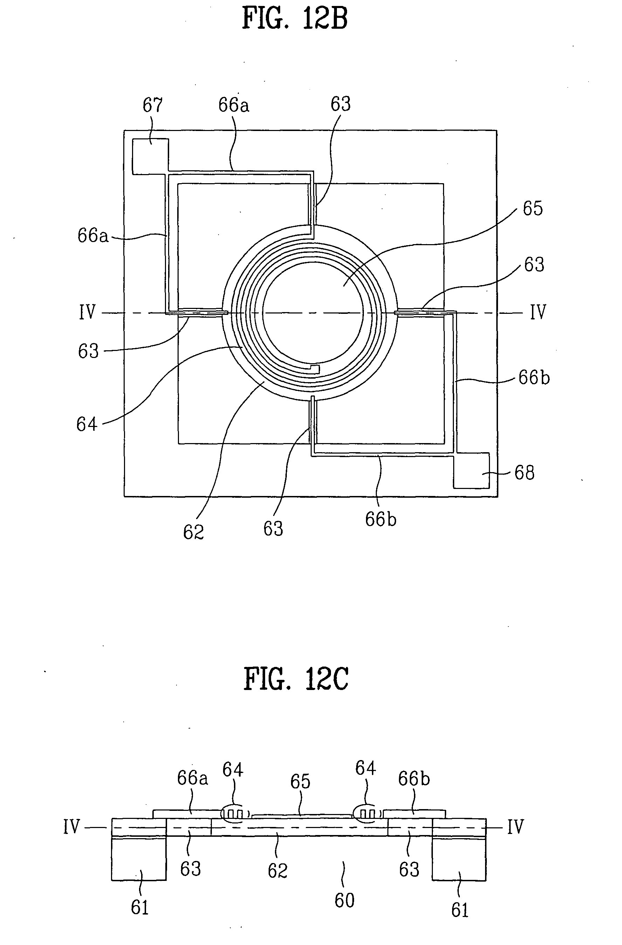

FIG. 12A illustrates a perspective view of another mirror part of the variable optical attenuator according to the present invention. FIG. 12B illustrates a plane view of the mirror part of FIG. 12A. And, FIG. 12C illustrates a cross-sectional view taken along line IV-IV of FIG. 12B.

FIGs. 12A to 12C are other embodiments of the micromirror driven by electromagnetic power, which may be applied to the variable optical attenuator making the vertical movement shown in FIG. 2A.

Referring to FIGs. 12A to 12C, a substrate 61 includes at least one via hole 60. Herein, depending upon the fabrication method, at least one via hole 60 may be formed on the substrate 61, or the lower surface of the substrate 61 may be etched to expose the surface of the micromirror.

Additionally, a micromirror 62 is formed in the via hole area, and a reflective surface 65 is formed on the micromirror 62. A spring 63 formed on each of the four sides of the micromirror 62 connects the substrate 61 and the micromirror 62. Moreover, a coil 64 is formed on the micromirror 62 in the surrounding area of the reflective surface 65. The coil 64 makes vertical movements depending upon the external electric signal.

Similarly, due to an interaction between an external magnetic field vertically applied to the substrate and the magnetic field generated from the electric current flowing though the coil, the micromirror 62 having the coil 64 formed therein moves either in the +z direction or in the -z direction.

More specifically, when the external magnetic field is applied in the +z direction, and when the electric current is applied to the coil 64 in the +θ z direction, then the micromirror 62 moves to the -z direction. Conversely, when the electric current is applied to the coil 64 in the -θ z direction, then the micromirror 62 moves to the +z direction.

When the electric current is applied between a first electrode pad 67 and a second electrode pad 68, then the electric current flows to the coil 64 through a first connector 66a and a second connector 66b formed on the spring 63.

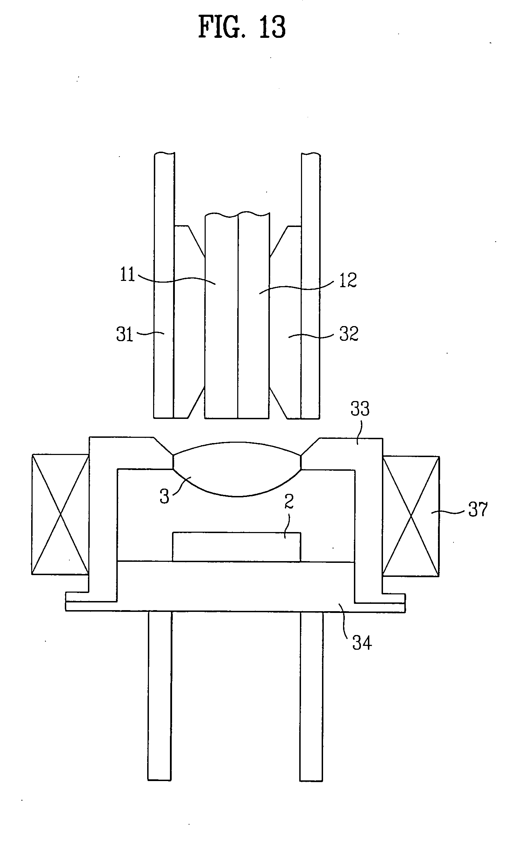

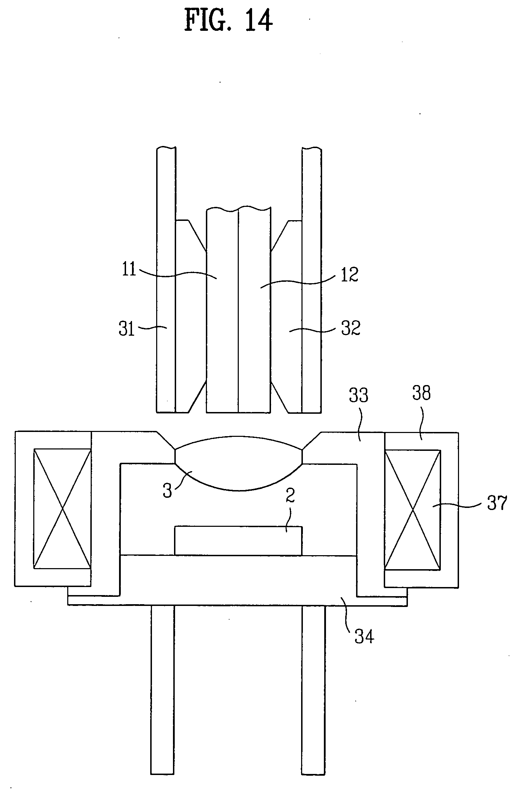

FIGs. 13 and 14 illustrate a magnetic coil being mounted on the package of the variable optical attenuator according to the present invention.

In FIG. 13, a magnetic coil 37 for applying an external magnetic field is fixed to the outer surface of a cap 33, in order to operate the micromirror driven by electromagnetic force of the mirror unit 2. Herein, the magnetic coil 37 can be fixed at any predetermined position whereby a magnetic field can be vertically applied to the mirror unit 2.

Moreover, the magnetic coil 37 can be applied to the first, second, and third embodiments of the present invention, as shown in FIGs. 4 and 5.

In FIG. 14, a yoke 38 is formed on the outer surface of the magnetic coil 37, so as to surround the magnetic coil 37, in order to maximize the size of the magnetic field applied to the mirror unit 2. Herein, the yoke 38 is formed of a material having a high permeability.

In addition, the yoke 38 can be applied to the first, second, and third embodiments of the present invention having the magnetic coil 37 formed thereon.

The present invention provides an optical attenuator, which is an essential assembly part of a receiving and transmitting module interface for optical telecommunications, by using a micromirror driven by an electromagnetic force.

More specifically, the present invention is advantageous in that an interface element small in size and light weight can be fabricated by a micromachining technology and a series of semiconductor manufacturing processes, thereby reducing the cost in the assembly part. Also, the required amount of driving power can be reduced, and, since the input and output optical fibers are integrated, the alignment process during the assembly is simplified. Furthermore, the optical switch is expanded, thereby providing a drop module of an n channel Optical Add/Drop Multiplexer (OADM).

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The claims refer to examples of preferred embodiments of the invention. However, the invention also refers to combinations of any claim or claims with any other claim or claims and/or with any feature or combination of features which is or are disclosed in the description and/or in the drawings.

## Claims

1. A variable optical attenuator, comprising:
an optical fiber part formed of at least one input optical fiber integrated with at least one output optical fiber;
a mirror part having at least one micromirror facing into and spaced apart from the optical fiber part, reflecting emitted light rays emitted from the input fiber to the output fiber, and making one of a vertical movement and a rotational movement, so as to attenuate the emitted light rays; and
a lens formed between the optical fiber part and the mirror part, and focusing the emitted light rays emitted from the input optical fiber to the micromirror.

2. The attenuator according to claim 1, wherein the input optical fiber and the output optical fiber of the optical fiber part are either adjacent to one another or spaced apart from one another.

3. The attenuator according to claim 1, wherein the optical fiber part comprises:
an input optical fiber and an output optical fiber;
a tube surrounding the input optical fiber and the output optical fiber; and
an optical fiber fastener fixed between the input and output optical fibers and the tube, so as to fasten the input and output optical fibers.

4. The attenuator according to claim 3, wherein the lens focuses the emitted light rays emitted from the input optical fiber is fixed inside the tube at a front portion of the input and output optical fibers.

5. The attenuator according to claim 3, wherein the optical fiber fastener is formed in a shape of one of a V-groove and a ferrule.

6. The attenuator according to claim 3, wherein the optical fiber fastener is formed of any one of glass, silicon, zirconium, metal, and polymer.

7. The attenuator according to claim 1, further comprising a mirror support formed at a lower portion of the mirror unit, so as to support the mirror unit.

8. The attenuator according to claim 1, further comprising a cap formed on an upper portion of the mirror unit, so as to protect the mirror unit.

9. The attenuator according to claim 8, wherein a lens focusing the emitted light rays emitted from the input optical fiber is fixed to a central portion of the cap.

10. The attenuator according to claim 8, wherein a window transmitting the emitted light rays emitted from the input optical fiber is fixed to the central portion of the cap.

11. The attenuator according to claim 8, wherein a magnetic coil applying an external magnetic field to the micromirror of the mirror unit is fixed to an outer surface of the cap.

12. The attenuator according to claim 11, wherein a yoke increasing the magnetic field of the magnetic coil surrounds an outer surface of the magnetic coil.

13. The attenuator according to claim 1, wherein the mirror unit comprises:
a substrate having at least one via hole;
a micromirror formed on an area of the at least one via hole;
a reflective surface formed on the micromirror;
an elastic body formed on the micromirror at each side of the reflective surface;
a spring connecting a surface of the micromirror and the substrate; and
a coil formed on the surface around the micromirror including the spring and making rotational movements of the micromirror in accordance with an external electrical signal.

14. The attenuator according to claim 13, wherein the elastic body and the spring are formed to be perpendicular to each other.

15. The attenuator according to claim 13, wherein the coil comprises:
a first electrode pad and a second electrode pad;
a lower conductive wire connected to the first electrode pad;
an upper conductive wire connected to the second electrode pad;
a core electrically connecting the lower conductive wire to the upper conductive wire;
a lower insulating layer insulating the substrate and the lower conductive wire; and
an upper insulating layer insulating the upper conductive wire and the lower conductive wire.

16. The attenuator according to claim 13, further comprising a lens fastener formed at a predetermined height at an end portion of the substrate and fastening the lens focusing the emitted light rays emitted from the input optical fiber.

17. The attenuator according to claim 1, wherein the mirror unit comprises:
a substrate having at least one via hole;
a micromirror formed on an area of the at least one via hole;
a reflective surface formed on the micromirror;
a spring connecting four surface of the micromirror to the substrate; and
a coil formed on the micromirror around the reflective surface and making vertical movements of the micromirror in accordance with an external electrical signal.

18. The attenuator according to claim 17, wherein the coil comprises:
a first electrode pad and a second electrode pad;
a lower conductive wire connected to the first electrode pad;
an upper conductive wire connected to the second electrode pad;
a core electrically connecting the lower conductive wire to the upper conductive wire;
a lower insulating layer insulating the substrate and the lower conductive wire; and
an upper insulating layer insulating the upper conductive wire and the lower conductive wire.

19. The attenuator according to claim 17, further comprising a lens fastener formed at a predetermined height at an end portion of the substrate and fastening the lens focusing the emitted light rays emitted from the input optical fiber.

20. A variable optical attenuator, comprising:
at least one of an input optical fiber and an output optical fiber adjacent to or spaced apart from one another;
a tube surrounding the input optical fiber and the output optical fiber;
an optical fiber fastener fixed between the input and output optical fibers and the tube, so as to fasten the input and output optical fibers;
a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays;
a mirror support fixed to a lower portion of the mirror unit and supporting the mirror unit; a lens formed between the input and output optical fibers and the mirror part, and focusing the emitted light rays emitted from the input optical fiber to the micromirror; and
a lens support fixed to an upper portion of the mirror unit and supporting the lens.

21. The attenuator according to claim 20, further comprising a cap fixed to the mirror support so as to be formed on the upper portion of the mirror unit including the lens, and having a window transmitting the emitted light rays emitted from the input optical fiber fixed to a central portion of the cap.

22. The attenuator according to claim 21, wherein a magnetic coil is fixed to an outer surface of the cap, so as to apply an external magnetic field to the micromirror of the mirror unit.

23. The attenuator according to claim 20, wherein the mirror unit comprises:
a substrate having at least one via hole;
a micromirror formed on an area of the at least one via hole;
a reflective surface formed on the micromirror;
a spring connecting a surface or four surfaces of the micromirror and the substrate; and
a coil formed on the surface around the micromirror including the spring and making rotational movements or vertical movements of the micromirror in accordance with an external electrical signal.

24. The attenuator according to claim 23, wherein an elastic body is formed on the micromirror at each side of the reflective surface, when the spring is connected to only one surface of the micromirror.

25. A variable optical attenuator, comprising:
at least one of an input optical fiber and an output optical fiber adjacent to or spaced apart from one another;
a tube surrounding the input optical fiber and the output optical fiber;
an optical fiber fastener fixed between the input and output optical fibers and the tube, so as to fasten the input and output optical fibers;
a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays;
a mirror support fixed to a lower portion of the mirror unit and supporting the mirror unit;
a lens formed between the input and output optical fibers and the mirror part, and focusing the emitted light rays emitted from the input optical fiber to the micromirror; and
a cap formed on an upper portion of the mirror unit including the mirror support, and fastening the lens.

26. The attenuator according to claim 25, wherein a magnetic coil is fixed to an outer surface of the cap, so as to apply an external magnetic field to the micromirror of the mirror unit.

27. The attenuator according to claim 25, wherein the mirror unit comprises:
a substrate having at least one via hole;
a micromirror formed on an area of the at least one via hole;
a reflective surface formed on the micromirror;
a spring connecting a surface or four surfaces of the micromirror and the substrate; and
a coil formed on the surface around the micromirror including the spring and making rotational movements or vertical movements of the micromirror in accordance with an external electrical signal.

28. The attenuator according to claim 27, wherein an elastic body is formed on the micromirror at each side of the reflective surface, when the spring is connected to only one surface of the micromirror.

29. A variable optical attenuator, comprising:
at least one of an input optical fiber and an output optical fiber adjacent to or spaced apart from one another;
a tube surrounding the input optical fiber and the output optical fiber;
an optical fiber fastener fixed between the input and output optical fibers and the tube, so as to fasten the input and output optical fibers;
a mirror unit having at least one micromirror facing into and spaced apart from the input and output optical fibers, reflecting emitted light rays emitted from the input fiber to the output fiber, and making one of a vertical movement and a rotational movement, so as to attenuate the emitted light rays;
a mirror support fixed to a lower portion of the mirror unit and supporting the mirror unit; a lens formed at a front portion of the input and output optical fibers inside the tube, and focusing the emitted light rays emitted from the input optical fiber to the micromirror; and
a cap formed on an upper portion of the mirror unit and having a window transmitting the emitted light rays emitted from the input optical fiber.

30. The attenuator according to claim 29, wherein a magnetic coil is fixed to an outer surface of the cap, so as to apply an external magnetic field to the micromirror of the mirror unit.

31. The attenuator according to claim 29, wherein the mirror unit comprises:
a substrate having at least one via hole;
a micromirror formed on an area of the at least one via hole;
a reflective surface formed on the micromirror;
a spring connecting a surface or four surfaces of the micromirror and the substrate; and
a coil formed on the surface around the micromirror including the spring and making rotational movements or vertical movements of the micromirror in accordance with an external electrical signal.

32. The attenuator according to claim 31, wherein an elastic body is formed on the micromirror at each side of the reflective surface, when the spring is connected to only one surface of the micromirror.
